# EUROPEAN PATENT SPECIFICATION

(11) **EP 2 735 491 B1**
(45) Date of publication and mention of the grant of the patent: **29.06.2016**
(21) Application number: 12193585.2
(22) Date of filing: 21.11.2012
(51) Int. Cl.: B61L 3/00, B60W 50/00

(54) **Method and device for minimizing the energy consumption of vehicles**
Verfahren und Vorrichtung zur Minimierung des Energieverbrauchs von Fahrzeugen
Procédé et dispositif permettant de minimiser la consommation d'énergie de véhicules

(43) Date of publication of application: 28.05.2014
(73) Proprietor: Siemens Aktiengesellschaft, 80333 München (DE)
(72) Inventor: Reinschke, Johannes, 90425 Nürnberg (DE); Patre, Parag, North Brunswick, 08902 (US); Lehmann, Thomas, 91052 Erlangen (DE)

(56) References cited:
- WO-A1-2010/100044
- DE-A1- 19 935 349
- DE-A1- 19 935 353
- US-A1- 2009 132 113
- Ulrich Linden: "Optimierung von Fahrweisen im spurgeführten Verkehr und deren Umsetzung", , 26 April 2004 (2004-04-26), XP055062319, Berlin Retrieved from the Internet: URL:http://opus.kobv.de/tuberlin/volltexte /2004/790/pdf/linder_ulrich.pdf [retrieved on 2013-05-08]
- LINDER U ET AL: "Strategien und Hindernisse bei der Optimierung von Fahrweisen", ELEKTRISCHE BAHNEN, OLDENBOURG INDUSTRIEVERLAG, MUNCHEN, DE, vol. 103, no. 3, 1 January 2004 (2004-01-01), pages 109-115, XP001539859, ISSN: 0013-5437

## Description

This invention relates to a method and device for minimizing the energy consumption of vehicles, especially of track guided vehicles.

Drive train design tools are known which compute driving patterns. Those tools can compute the minimum travel time of a given vehicle on specified routes or tracks, the so-called minimum travel time ride (MTT ride). This is a theoretical value for the shortest possible travel time. For real-world driving, the real travel time and a scheduled travel time (STT) will be longer than the MTT. The STT according to the train's time table or schedule may be considered to be the sum of a travel time allocated to an applied driving pattern and a so-called "retention time". The retention time is typically given in % of the MTT and ranges between 3% and 7%. But the retention time can also be as large as 20% or 30% of the MTT.

A minimum travel time is a shortest possible travel time. The scheduled travel time is the sum of the travel time of the applied driving pattern and the corresponding retention time.

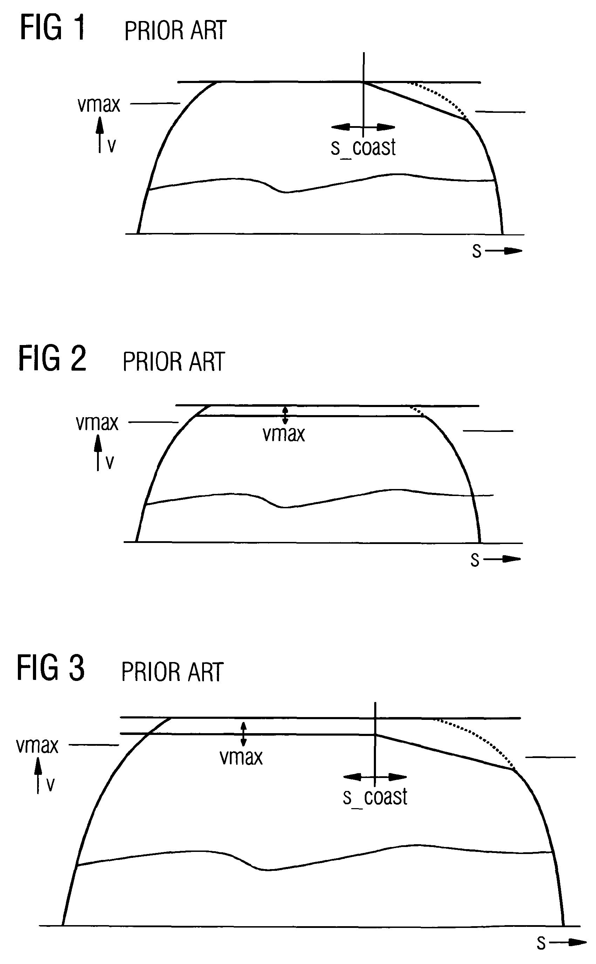

In addition to the MTT computation, the following simple method of calculating an energy-saving ride is known by the state of the art. According to this method merely coasting before braking to stop is introduced. Figure 1 shows an embodiment of this prior art method. The lower line shows the track's altitude profile. The upper line shows the vehicle speed v over distance s. A constraint is that the target value for the travel time must be met exactly. A result is that coasting is performed before braking whereby the distance s_coast for starting the coasting can be shifted. Figure 1 shows a first energy saving driving mode which is coasting before braking to stop.

Moreover, other energy saving modes of operations are known like lowering the maximum speed v_max as indicated in Figure 2. Figure 2 shows another embodiment of a prior art method. Here, energy is saved by reducing the maximum speed. A constraint is to exactly meet the target value for the travel time. The result is a maximum speed v_max which is lower than the original maximum speed. The energy saving driving mode 2 is shown in Figure 2. The lower maximum speed results in a travel time which is equal to the one of Figure 1.

Mathematically speaking, the energy-saving methods according to Figures 1 and 2 result in a so-called root-finding problem which can be solved for example by using the so-called Newton Iteration Method.

In order to come closer to a loss-minimizing or optimum energy mode of operation a combination of the energy-saving modes according to Figure 1 and Figure 2 is considered next, this combination being shown in Figure 3. Figure 3 shows another embodiment of a prior art method. Here, the maximum speed of the vehicle is lowered slightly compared with the maximum permissible speed - for example a track's top speed - but less than shown in Figure 2, and the coasting phase begins somewhat later than in Figure 1. Again, a constraint is to exactly meet the target value of travel time. Figure 3 is a sketch of the two measures to reduce energy consumption. The top speed is lowered and coasting is introduced. The travel time should be the same as in Figure 1.

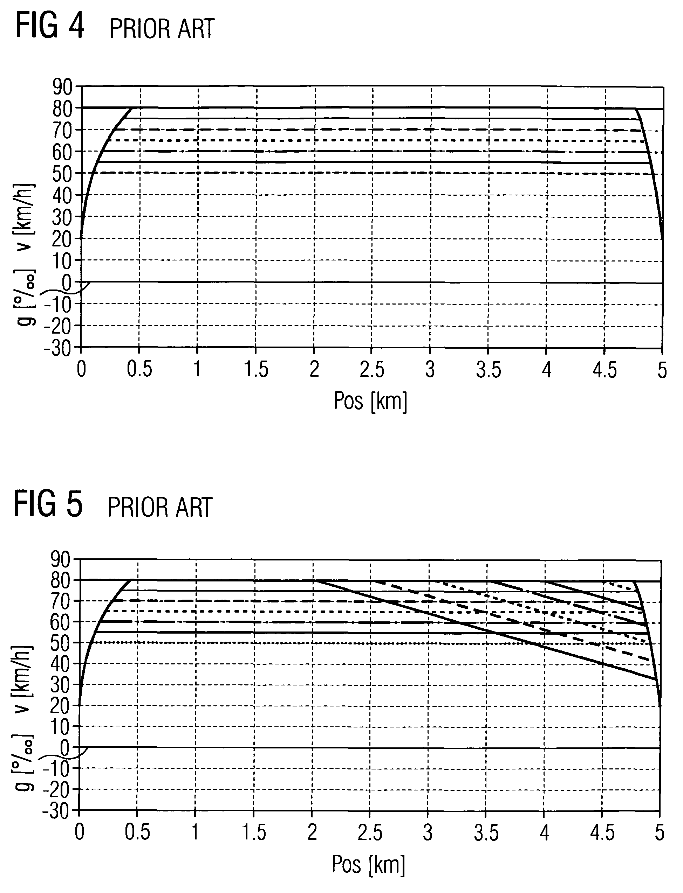

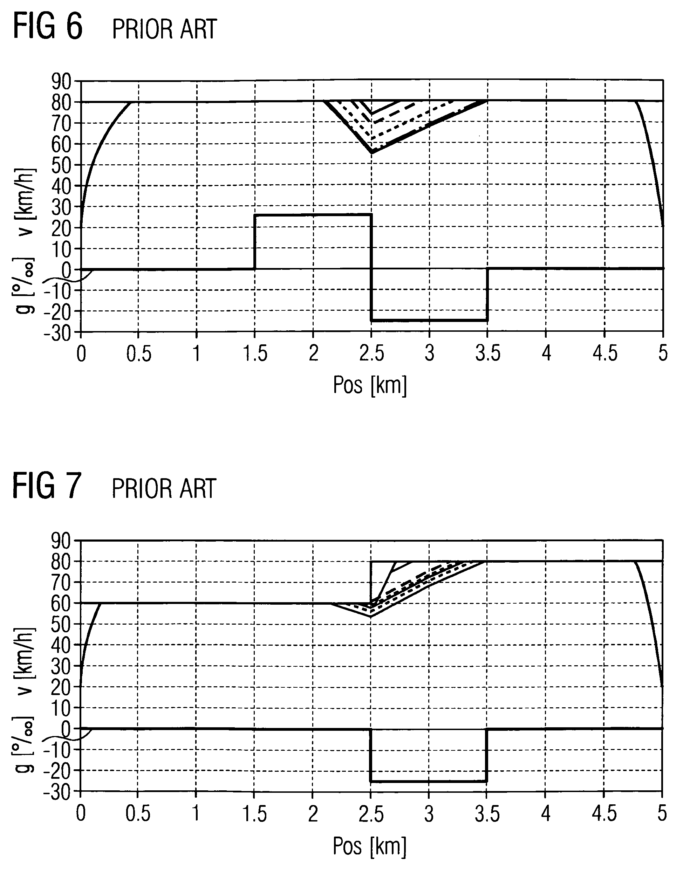

According to U. Linder: "Optimierung von Fahrweisen im spurgeführten Verkehr und deren Umsetzung", Dissertation, TU Berlin, 2004, pp. 50, there are four methods of energy reduction. Figure 4 shows the first one of reducing speed, especially the maximum speed. The second method, coasting before braking, is shown in Figure 5. Note that in Figures 4 to 7, the track profile is not the track's altitude profile shown in Figures 1 to 3, but the track's slope. Figure 6 shows, thirdly, a combination of uphill and downhill coasting. Figure 7 shows the fourth method of downhill coasting, when the speed limit increases during the downhill ride. All the Figures show speed over position. A method for computing an energy-saving driving pattern or driving strategy is illustrated in appendix C of Linder's dissertation.

It is an object of the invention to provide an over prior art improved simple and effective way of minimizing the energy consumption of vehicles, especially track guided vehicles like trains, metros or mobile mining trucks. Energy-saving driving patterns or driving strategies should be determined by an improved way. Additionally several alternative operation modes should be provided which can be chosen according to specific time and energy constraints. Moreover an optimization may be performed whilst the vehicle is already running. Moreover, the invention should also be applicable to cars, trucks and other road or rail vehicles.

The object is solved by a method according to the main claim and by a device according to the assessory claim.

According to a first aspect a method for minimizing the energy consumption of a vehicle applying resulting driving patterns is suggested, whereby a calculator means in a calculation starts from an initial driving pattern comprising at least one local action point; stepwise varies a duration and/or a quantity of change of one energy-saving measure applied to one local action point and creates consecutive driving patterns; identifies a varying step with a maximum ratio of energy reduction and travel time extension in relation to the initial driving pattern; performs the varying and the identifying for each local action point; provides a resulting driving pattern of the varying step with an overall maximum value of the maximum ratio of energy reduction and travel time extension.

According to a second aspect a device for minimizing the energy consumption of a vehicle applying resulting driving patterns is suggested, whereby a calculator means in a calculation starts from an initial driving pattern comprising at least one local action point; stepwise varies a duration and/or a quantity of change of one energy-saving measure applied to one local action point and creates consecutive driving patterns; identifies a varying step with a maximum ratio of energy reduction and travel time extension in relation to the initial driving pattern; performs the varying and the identifying for each local action point; provides a resulting driving pattern of the varying step with an overall maximum value of the maximum ratio of energy reduction and travel time extension.

A driving pattern for a vehicle is represented by the vehicle's velocity versus distance or travel time. Given the driving pattern, a travel time and an energy consumption of a ride on a specified route or track from a first stop to a subsequent second stop can be computed. A scheduled travel time between the first and the second stop of the route is a travel time according to a given time-table. A retention time is the scheduled travel time minus the travel time. Given a driving pattern, the retention time of that driving pattern can be computed.

Additional embodiments are claimed in connection with the subclaims.

According to an embodiment, the calculator means can repeat the calculation and can generate a sequence of consecutive resulting driving patterns until it provides an optimal resulting driving pattern, whereby a resulting driving pattern of a previous calculation is the initial driving pattern for a subsequent calculation. Accordingly an iteration method can be performed to decrease energy consumption of applicable driving patterns.

According to a further embodiment, the optimal resulting driving pattern can be the resulting driving pattern of the calculation precedent to the calculation producing the first resulting driving pattern with a negative retention time.

According to a further embodiment, the optimal resulting driving pattern can be the resulting driving pattern where twice the retention time of this resulting driving pattern minus the retention time of the resulting driving pattern of the previous calculation gives a negative number.

According to a further embodiment, the calculator means can reverse the sequence of the consecutive resulting driving patterns and its varying steps, the reversed sequence starting backwards from the optimal resulting driving pattern with decreasing application priority.

According to a further embodiment, an applied resulting driving pattern can be a lower priority resulting driving pattern instead of a precedent applied higher priority resulting driving pattern to compensate for a time delay of the vehicle between two stops with respect to a prescribed time schedule.

According to a further embodiment, the vehicle can be controlled by a control means whilst operating according to an applied resulting driving pattern.

According to a further embodiment, the local action points can be localized at sites of a driving pattern where reductions of a vehicle's driving force take place.

According to a further embodiment, an energy-saving measure can be introducing a section of constant speed which is lower than the maximum speed in that section of the initial driving pattern.

According to a further embodiment, the introducing can be implemented by extending an existing section of constant speed to a larger section with reduced constant speed.

According to a further embodiment, the introducing can be implemented by introducing a section of constant speed where previously was acceleration followed by deceleration.

According to a further embodiment, an energy-saving measure can be introducing coasting.

According to a further embodiment, coasting can be applied at action points where a vehicle's driving force changes from a positive value to a negative value or zero.

According to a further embodiment, all driving patterns can be represented by vectors for parameters and for constraints.

According to a further embodiment, the initial driving pattern of a first calculation can be a driving pattern with a minimum travel time and maximum energy consumption.

The invention is described by embodiments in relations to the Figures. The Figures show:
- Figure 1: shows a first embodiment of a prior art method;
- Figure 2: shows an embodiment of a second prior art method;
- Figure 3: shows an embodiment of a third prior art method;
- Figure 4: shows another embodiment of the second prior art method;
- Figure 5: shows another embodiment of the first prior art method;
- Figure 6: shows another embodiment of another prior art method;
- Figure 7: shows another embodiment of a further prior art method;
- Figure 8: shows a first embodiment concerning an inventive method;
- Figure 9: shows another diagram concerning the first embodiment of an inventive method;
- Figure 10: shows another diagram concerning the first embodiment of inventive method;
- Figure 11: shows another diagram concerning the first embodiment of the inventive method;
- Figure 12: shows another diagram concerning the first embodiment of the inventive method;
- Figure 13: shows an embodiment of an inventive device;
- Figure 14: shows a second embodiment of an inventive method.

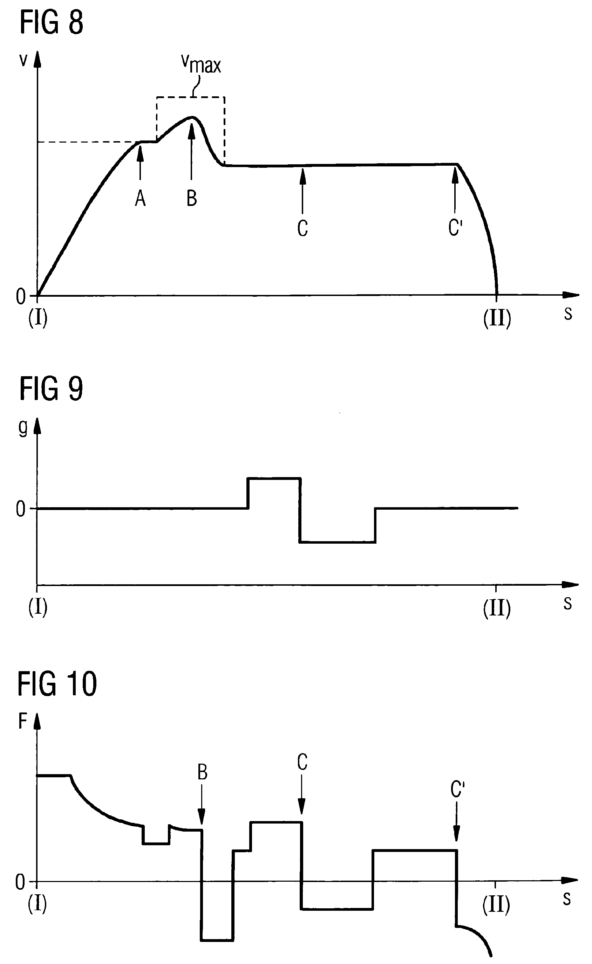

Figure 8 shows a first diagram concerning a first embodiment of the inventive method. Figure 8 shows the vehicle speed v over position s along a track. The vehicle can for example be a rail-guided train. The vehicle starts at stop I at distance s=0 and accelerates until a point A afterwards keeps the velocity and accelerates again until a point B, afterwards decelerates down to a constant travel speed passing trough action points D and C'. According to this invention, the inventive method starts with an initial driving pattern which can represent a minimum travel time ride which is also called "fast run". Figure 8 shows an example of such an initial driving pattern.

From a mathematical point of view the subject of the invention is a so-called optimization problem with constraints. The optimization criterion is that the energy consumed during the ride should be minimal, and the constraints are that the travel time needs to match a pre-specified value which is given for example by the train's time schedule; another constraint is that all speed limits need to be observed, those speed limits, for example, being given by the track property data. In addition, the mathematical problem formulation needs to take into account a given vehicle track topology which can be for example a track slope which is shown in Figure 9 in relation to the initial driving pattern of Figure 8. Furthermore, basic vehicle data such as vehicle mass, air resistance and power train data need to be considered. According to the invention a method and a device are suggested for solving this optimization problem of minimizing the vehicle's energy consumption. The inventive method and device are suitable for computing energy-optimal or loss-minimizing driving patterns.

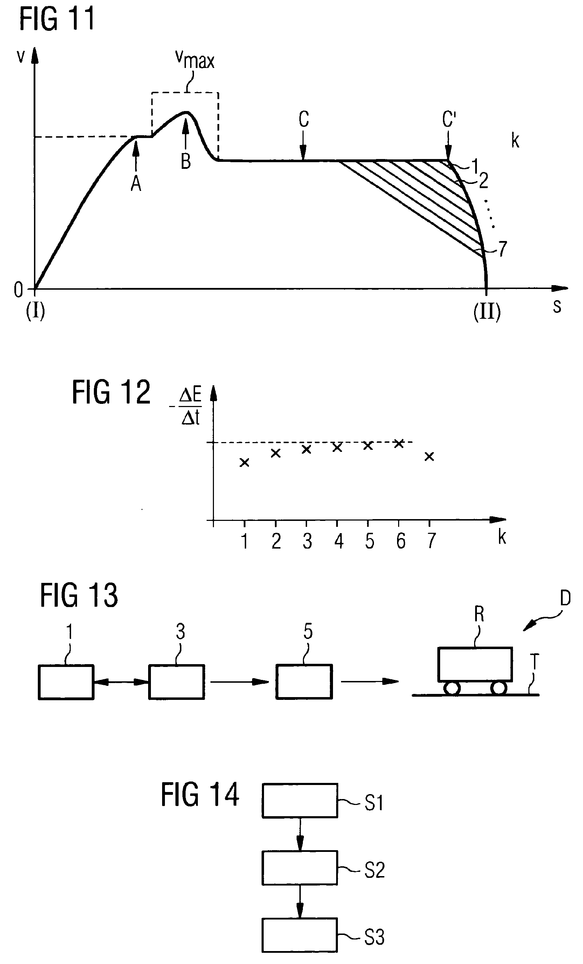

Figures 8 to 12 show the first embodiment of an inventive method by relevant diagrams. Starting from Figure 11 first a vehicle time schedule or time table has to be met. Accordingly, it is sufficient to consider a track section from a first stop I to the next stop II. According to this embodiment, the vehicle is a train which is guided on rail tracks. Alternatively, the vehicle may be a road vehicle like for example a car or a lorry. The initial driving pattern can be described by vectors especially for time, distance, velocity, acceleration and so on. The vectors are denoted between stop I and stop II for the fast ride being tVec(0), dVec(0), vVec(0), aVec(0) and so on. Similarly, any other driving pattern that will be computed by the inventive method or device will be characterized by the vectors tVec(k), dVec(k), vVec(k), aVec(k) and so on, where k = 1,2,....

Looking at velocity curves like the one shown in Figure 8, slope curves like the one shown in Figure 9 and driving force - which can be an electrical force - curves like the one shown in Figure 10, it is possible to distinguish between the following modes of operation:
a) velocity
   a>0 (acceleration)
   a=0 (holding/constant speed)
   a<0 (deceleration).
b) track slope g
   g>0 (positive slope/uphill)
   g=0 (level-flat)
   g<0 (negative slope/downhill).
c) driving force F:
   F>0 (motoring)
   F=0 (coasting)
   F<0 (braking).

The invention is based on so-called "Action Points". These action points are derived from a change in the mode of operation. At every action point, suitable methods for saving energy are explored. In principle, any change in mode of operation could be viewed as an action point. However, we only consider the ones that yield the best improvements with respect to energy consumption. Analyzing the four prior art methods of energy reduction, they can be generalized yielding only two methods: First introducing a section of constant speed which is lower than the fast run maximum speed in that section, and second introducing coasting. The first method will be implemented either by extending an existing section of constant speed to a larger section with reduced constant speed, or by introducing a section of constant speed where previously there was acceleration followed by deceleration, which is usually due to braking. The second method will be applied when the vehicle's driving force changes from a positive value to a negative value or zero. The vehicle's driving force is an electrical force in case the vehicle is driven by an electrical motor. In case the vehicle is driven by a different engine, other than an electrical motor, the vehicle's driving force is combustion-induced, and the inventive method applies similarly.

Therefore, analyzing an existing driving pattern, especially with non-negligible positive retention time, different action points are identified first. Action points can be described in the following way. An action point A is described by beginning of constant speed and a switching of acceleration to holding, whereby the first measure for energy reduction can be applied. Action point B is described by switching motoring to braking or coasting, whereby the first or the second method for energy reduction can be applied. Action point C is described by a change from acceleration or holding to braking or coasting, whereby the second measure for energy reduction can be applied. A more precise definition of these three action points can be the following.
Action point A: Change from F>0&a>0 towards F>0&a=0;
Action point B: F>0&a>0 changes towards F<=0;
Action point C: F>0 changes towards F<=0& v∼=0 and not satisfying the conditions of action point B.

In contrast to prior art of Linder, the track slope is only considered indirectly in the definition of action points according to the present invention. The track slope shown by Figure 9 is merely considered indirectly by looking at the driving force F shown by Figure 10 to determine action points.

Figure 8 and Figure 11 show a driving pattern to be optimized and also illustrate the three types of action points, whereby Figure 8 and 11 show a track section from stop I to the subsequent stop II. At each action point mentioned above, the inventive method tries to apply the first and/or the second energy reduction method described above, thereby varying the intensity and/or length respectively, i.e. amount of change and duration, of the energy-reducing measure.

Figure 11 shows that at action point C' coasting is introduced. For each of the trials k=1 to 7 shown in Figure 11 the ratio of energy reduction -ΔE and travel time extension Δt in relation to the initial driving pattern of Figure 8 is calculated. For each action point the trial whose ratio -ΔE/Δt is best is finally selected for controlling the vehicle.

Figure 12 shows the ratio -ΔE/Δt for each trial k=1 to 7 for each action point where the maximum value of this ratio is indicated by a horizontal dashed line. Next, the values of - ΔE/Δt for each action point are compared. The action point with the biggest value is then selected and an initial driving pattern is modified locally around this action point by implementing the energy reduction action that maximizes -E/Δt thereby creating a resulting driving pattern. This resulting driving pattern is an initial driving pattern for a next energy-minimizing driving pattern calculation. If a previous resulting driving pattern #n was characterized by the vectors tVec(n), dVec(n), vVec(n), aVec(n) and so on for time, distance, velocity, acceleration and so on, then the subsequent resulting driving pattern #(n+1) is characterized by the vectors tVec(n+1), dVec(n+1), vVec(n+1), aVec(n+1) and so on. For each resulting driving pattern #k, k=1, 2, ..., the retention time t_ret(k) and the total energy consumption E(k) is computed and stored. This method of driving pattern improvements is repeated until a resulting driving pattern #N or #(N+1) is achieved, for which either
a) t_ret(N+1)<0, or
b) (2*t_ret(N)-t_ret(N-1))<0 hold.

Note that if condition a) holds for resulting driving pattern #(N+1), then we discard this resulting driving pattern and only retain the resulting driving patterns #0 to #N. If condition b) holds, then it is very likely, that resulting driving pattern #(N+1) will have negative retention time, which is not needed to be computed.

For minimizing the energy consumption for example of trains a calculator or processor means computes, stores and at least partially outputs a sequence of resulting driving patterns can be characterized in the following way:
1. All of the resulting driving patterns meet the prescribed time schedule.
2. The first initial driving pattern can be the fast run driving pattern, which means the travelling time of this driving pattern cannot be decreased further.
3. The total energy consumption decreases monotonically whilst the travelling time increases monotonically from the first to the last resulting driving pattern.
4. The ratio between total energy consumption decrease and travelling time increase between two consecutive resulting driving patterns typically reduces from the first to the last resulting driving pattern.

The inventive method and device for minimizing the energy consumption especially of trains can also be used online, whilst the vehicle is running on a given track, in the following way. In other words, computing of energy-optimal or loss-minimizing driving patterns can not only be performed offline, but also online, which means the inventive method and device can also be used as a semi-automatic or fully automatic driver assistance system. When the vehicle is departing at the starting point of the track, and assuming the departure time to be according to the vehicle's time schedule, then the pre-computed resulting driving pattern #N is implemented. If a delay occurs during the train ride, which would result in the train being late if one adhered to resulting driving pattern #N, then resulting driving pattern #N is discarded. If resulting driving pattern #(N-1) results also in a late arrival of the train, then this resulting driving pattern would also be discarded. This process is continued until the resulting driving pattern is found that gets the train back on time, or until the first initial driving pattern, which can be the fast run driving pattern, is reached.

The inventive step lies in a "greedy" optimization strategy, which considers local improvements of an initial driving pattern - which is advantageously a fast run driving pattern - and sorts these improvements according to the ratio between total energy consumption decrease and travelling time increase for each improvement. In this way, the local driving pattern improvements that save most energy, but result in the smallest prolongation of travelling time, are considered first. Similar to lossless raw data conversion in digital photography, all of the improvements and modifications of the initial driving pattern can be stored. Because of a lossless data storage, very little computational power is required. In an online use of the inventive method or device, it is possible to revert to a previous resulting driving pattern if the vehicle's or train's time schedule can no longer be met with the driving pattern currently in use.

Figure 13 shows an embodiment of an inventive device. The device D for automatic minimizing the energy consumption of a vehicle R uses optimizing driving patterns. The device D comprises a calculator means 1 which at local action points stepwise applies energy saving measures to an initial driving pattern representing a minimum total travel time and a maximum total energy consumption right from a stop I to a subsequent stop II of a specified route T, which can be a track, thereby creating alternative driving patterns each of which is created with each application step and each of which representing a certain total travel time and a certain total energy consumption. The device D further comprises a storage means 3 which stores an overall list of all the driving patterns. Moreover, a control means 5 controls the vehicle R by using a driving pattern out of the overall list whereby the higher a ratio of energy reduction and travel time extension of a driving pattern in relation to the initial driving pattern is the higher is the priority of this driving pattern for being used in respect to the minimizing of the energy consumption.

Figure 14 shows another embodiment of an inventive method with the following steps. First step S1 is stepwise applying energy saving measures to an initial driving pattern representing a minimum travel time and a maximum energy consumption right from a stop I to a subsequent stop II of a specified route. The energy-saving measures are applied at local action points B, C creating resulting driving patterns. Each driving pattern represents a travel time and an energy consumption. According to a second step S2 an overall list of all resulting driving patterns is stored in a storage means. According to a third step S3 for example a train is controlled by a control means by using an optimal resulting driving pattern with the smallest positive retention time or the retention time being zero.

A method and a device minimize the energy consumption of a vehicle by optimizing an applied driving pattern, whereby a calculator means identifies an optimal resulting driving pattern for controlling a vehicle resulting in minimal energy consumption. Especially the energy consumption of track or road guided vehicles can be accordingly reduced. Moreover a storage means for storing driving patterns and a control means for controlling a vehicle can be implemented.

## Claims

1. Method for minimizing the energy consumption of a vehicle applying resulting driving patterns, whereby a calculator means in a calculation
- starts from an initial driving pattern comprising at least one local action point (A; B; C);
- stepwise varies a duration and/or a quantity of change of one energy-saving measure applied to one local action point (A; B; C) and creates consecutive driving patterns;
- identifies a varying step with a maximum ratio of energy reduction and travel time extension in relation to the initial driving pattern;
- performs the varying and the identifying for each local action point (A, B, C);
- provides a resulting driving pattern of the varying step with an overall maximum value of the maximum ratio of energy reduction and travel time extension.

2. Method of claim 1, **characterized in that** the calculator means repeats the calculation and generates a sequence of consecutive resulting driving patterns until it provides an optimal resulting driving pattern, whereby a resulting driving pattern of a precedent calculation is the initial driving pattern for a subsequent calculation.

3. Method of claim 2, **characterized in that** the optimal resulting driving pattern is the resulting driving pattern of the calculation precedent to the calculation with the first resulting driving pattern comprising a negative retention time.

4. Method of claim 2, **characterized in that** the optimal resulting driving pattern is the resulting driving pattern where twice the retention time of this driving pattern minus the retention time of the resulting driving pattern of the previous calculation is negative.

5. Method of claim 2, 3 or 4, **characterized in that** a storage means stores all resulting driving patterns and the calculator means reverses the sequence of the consecutive resulting driving patterns, the reversed sequence starting backwards from the optimal resulting driving pattern with decreasing application priority.

6. Method according to claim 5, **characterized in that** an applied resulting driving pattern is a lower-priority resulting driving pattern instead of a previously applied higher-priority resulting driving pattern to compensate for a time delay of the vehicle between two stops with respect to a prescribed time schedule.

7. Method according to one of the precedent claims, **characterized in that** the vehicle is controlled by a control means whilst operating according to an applied resulting driving pattern.

8. Method according to one of the precedent claims, **characterized in that** the local action points (A, B, C) are localized at sites of a driving pattern where reductions of a driving force of the vehicle take place.

9. Method according to one of the precedent claims, **characterized in that** an energy-saving measure is introducing a section of constant speed which is lower than the maximum speed **in that** section of the initial driving pattern.

10. Method of claim 9, **characterized in that** the introducing is implemented by extending an existing section of constant speed to a larger section with reduced constant speed.

11. Method of claim 9, **characterized in that** the introducing is implemented by introducing a section of constant speed where previously was acceleration followed by deceleration.

12. Method according to one of the precedent claims, **characterized in that** an energy-saving measure is introducing coasting.

13. Method of claim 12, **characterized in that** coasting is applied at action points where a vehicle's driving force changes from a positive value to a negative value or zero.

14. Method according to one of the precedent claims, **characterized in that** all driving patterns are represented by vectors for either velocity and time or velocity and distance.

15. Method according to one of the precedent claims, **characterized in that** the initial driving pattern of a first calculation is a driving pattern with minimum travel time and maximum energy consumption.

16. Device (D) for minimizing the energy consumption of a vehicle (R) applying resulting driving patterns, whereby a calculator means (1) in a calculation
- starts from an initial driving pattern comprising at least one local action point (A; B; C);
- stepwise varies a duration and/or a quantity of change of one energy-saving measure applied to one local action point (A; B; C) and creates consecutive driving patterns;
- identifies a varying step with a maximum ratio of energy reduction and travel time extension in relation to the initial driving pattern;
- performs the varying and the identifying for each local action point (A, B, C);
- provides a resulting driving pattern of the varying step with an overall maximum value of the maximum ratio of energy reduction and travel time extension.

17. Device of claim 16, **characterized in that** the calculator means repeats the calculation and generates a sequence of consecutive resulting driving patterns until it provides an optimal resulting driving pattern, whereby a resulting driving pattern of a precedent calculation is the initial driving pattern for a subsequent calculation.

18. Device of claim 17, **characterized in that** the optimal resulting driving pattern is the resulting driving pattern of the calculation precedent to the calculation with the first resulting driving pattern comprising a negative retention time.

19. Device of claim 17, **characterized in that** the optimal resulting driving pattern is the resulting driving pattern where twice the retention time of this driving pattern minus the retention time of the resulting driving pattern of the previous calculation is negative.

20. Device of claim 17, 18 or 19, **characterized in that** a storage means (3) stores all resulting driving patterns and the calculator means reverses the sequence of the consecutive resulting driving patterns, the reversed sequence starting backwards from the optimal resulting driving pattern with decreasing application priority.

21. Device according to claim 20, **characterized in that** an applied resulting driving pattern is a lower-priority resulting driving pattern instead of a previously applied higher-priority resulting driving pattern to compensate for a time delay of the vehicle between two stops with respect to a prescribed time schedule.

22. Device according to one of the precedent claims 16 to 21, **characterized in that** the vehicle is controlled by a control means (5) whilst operating according to an applied resulting driving pattern.

23. Device according to one of the precedent claims 16 to 22, **characterized in that** the local action points (A, B, C) are localized at sites of a driving pattern where reductions of a driving force of the vehicle take place.

24. Device according to one of the precedent claims 16 to 23, **characterized in that** an energy-saving measure is introducing a section of constant speed which is lower than the maximum speed **in that** section of the initial driving pattern.

25. Device of claim 24, **characterized in that** the introducing is implemented by extending an existing section of constant speed to a larger section with reduced constant speed.

26. Device of claim 24, **characterized in that** the introducing is implemented by introducing a section of constant speed where previously was acceleration followed by deceleration.

27. Device according to one of the precedent claims 16 to 26, **characterized in that** an energy-saving measure is introducing coasting.

28. Device of claim 27, **characterized in that** coasting is applied at action points where a driving force of the vehicle changes from a positive value to a negative value or zero.

29. Device according to one of the precedent claims 16 to 28, **characterized in that** all driving patterns are represented by vectors for either velocity and time or velocity and distance.

30. Device according to one of the precedent claims 16 to 29, **characterized in that** the initial driving pattern of a first calculation is a driving pattern with minimum travel time and maximum energy consumption.

## Patentansprüche

1. Verfahren zum Minimieren des Energieverbrauchs eines Fahrzeugs unter Anwendung resultierender Fahrweisen, wobei ein Berechnungsmittel bei einer Berechnung
- von einer ursprünglichen Fahrweise mit mindestens einem lokalen Aktionspunkt (A; B; C) ausgeht,
- schrittweise eine Dauer und/ oder einen Betrag einer Änderung einer an einem lokalen Aktionspunkt (A; B; C) angewandten Energiesparmaßnahme verändert und aufeinanderfolgende Fahrweisen erstellt,
- einen Veränderungsschritt mit einem maximalen Verhältnis von Energiereduzierung und Fahrzeitverlängerung in Bezug zur ursprünglichen Fahrweise bestimmt,
- das Verändern und das Bestimmen für jeden lokalen Aktionspunkt (A, B, C) durchführt,
- eine resultierende Fahrweise für den Veränderungsschritt mit einem maximalen Gesamtwert für das maximale Verhältnis von Energiereduzierung und Fahrzeitverlängerung bereitstellt.

2. Verfahren nach Anspruch 1, **dadurch gekennzeichnet, dass** das Berechnungsmittel die Berechnung wiederholt und eine Reihe aufeinanderfolgender resultierender Fahrweisen erzeugt, bis es eine resultierende optimale Fahrweise bereitstellt, wobei eine resultierende Fahrweise aus einer vorangegangenen Berechnung die ursprüngliche Fahrweise für eine nachfolgende Berechnung ist.

3. Verfahren nach Anspruch 2, **dadurch gekennzeichnet, dass** die resultierende optimale Fahrweise die resultierende Fahrweise aus der Berechnung ist, die der Berechnung mit der ersten resultierenden Fahrweise vorangegangen ist, welche eine negative Verweilzeit umfasst.

4. Verfahren nach Anspruch 2, **dadurch gekennzeichnet, dass** die resultierende optimale Fahrweise die resultierende Fahrweise ist, bei der das Doppelte der Verweilzeit bei dieser Fahrweise minus die Verweilzeit bei der resultierenden Fahrweise aus der vorangegangenen Berechnung negativ ist.

5. Verfahren nach Anspruch 2, 3 oder 4, **dadurch gekennzeichnet, dass** ein Speichermittel alle resultierenden Fahrweisen speichert und das Berechnungsmittel die Reihenfolge der aufeinanderfolgenden resultierenden Fahrweisen umkehrt, wobei die umgekehrte Reihenfolge bei abnehmender Anwendungspriorität von hinten bei der resultierenden optimalen Fahrweise beginnt.

6. Verfahren nach Anspruch 5, **dadurch gekennzeichnet, dass** es sich bei einer angewandten resultierenden Fahrweise um eine resultierende Fahrweise von geringerer Priorität statt einer zuvor angewandten resultierenden Fahrweise von höherer Priorität handelt, wodurch eine zeitliche Verzögerung des Fahrzeugs zwischen zwei Haltestellen in Bezug auf einen vorgegebenen Fahrplan kompensiert wird.

7. Verfahren nach einem der vorhergehenden Ansprüche, **dadurch gekennzeichnet, dass** das Fahrzeug während des Betriebs gemäß einer angewandten resultierenden Fahrweise von einem Steuermittel gesteuert wird.

8. Verfahren nach einem der vorhergehenden Ansprüche, **dadurch gekennzeichnet, dass** sich die lokalen Aktionspunkte (A, B, C) bei einer Fahrweise an Stellen befinden, an denen es zu Reduzierungen einer Antriebskraft des Fahrzeugs kommt.

9. Verfahren nach einem der vorhergehenden Ansprüche, **dadurch gekennzeichnet, dass** durch eine Energiesparmaßnahme ein Abschnitt von konstanter Geschwindigkeit eingeleitet wird, die geringer ist als die Maximalgeschwindigkeit bei der ursprünglichen Fahrweise in diesem Abschnitt.

10. Verfahren nach Anspruch 9, **dadurch gekennzeichnet, dass** das Einleiten durch Verlängern eines bestehenden Abschnitts von konstanter Geschwindigkeit auf einen größeren Abschnitt mit reduzierter konstanter Geschwindigkeit erfolgt.

11. Verfahren nach Anspruch 9, **dadurch gekennzeichnet, dass** das Einleiten durch Einleiten eines Abschnitts von konstanter Geschwindigkeit umgesetzt wird, wo zuvor auf eine Beschleunigung eine Abbremsung erfolgte.

12. Verfahren nach einem der vorhergehenden Ansprüche, **dadurch gekennzeichnet, dass** durch eine Energiesparmaßnahme ein Ausrollen eingeleitet wird.

13. Verfahren nach Anspruch 12, **dadurch gekennzeichnet, dass** Ausrollen an Aktionspunkten angewandt wird, wo eine Antriebskraft des Fahrzeugs von einem positiven Wert auf einen negativen Wert oder null wechselt.

14. Verfahren nach einem der vorhergehenden Ansprüche, **dadurch gekennzeichnet, dass** alle Fahrweisen entweder durch Vektoren für Geschwindigkeit und Zeit oder für Geschwindigkeit und Entfernung repräsentiert werden.

15. Verfahren nach einem der vorhergehenden Ansprüche, **dadurch gekennzeichnet, dass** es sich bei der ursprünglichen Fahrweise aus einer ersten Berechnung um eine Fahrweise mit minimaler Fahrzeit und maximalem Energieverbrauch handelt.

16. Vorrichtung (D) zum Minimieren des Energieverbrauchs eines Fahrzeugs (R) unter Anwendung resultierender Fahrweisen, wobei ein Berechnungsmittel (1) bei einer Berechnung
- von einer ursprünglichen Fahrweise mit mindestens einem lokalen Aktionspunkt (A; B; C) ausgeht,
- schrittweise eine Dauer und/ oder einen Betrag einer Änderung einer an einem lokalen Aktionspunkt (A; B; C) angewandten Energiesparmaßnahme verändert und aufeinanderfolgende Fahrweisen erstellt,
- einen Veränderungsschritt mit einem maximalen Verhältnis von Energiereduzierung und Fahrzeitverlängerung in Bezug zur ursprünglichen Fahrweise bestimmt,
- das Verändern und das Bestimmen für jeden lokalen Aktionspunkt (A, B, C) durchführt,
- eine resultierende Fahrweise für den Veränderungsschritt mit einem maximalen Gesamtwert für das maximale Verhältnis von Energiereduzierung und Fahrzeitverlängerung bereitstellt.

17. Vorrichtung nach Anspruch 16, **dadurch gekennzeichnet, dass** das Berechnungsmittel die Berechnung wiederholt und eine Reihe aufeinanderfolgender resultierender Fahrweisen erzeugt, bis es eine resultierende optimale Fahrweise bereitstellt, wobei eine resultierende Fahrweise aus einer vorangegangenen Berechnung die ursprüngliche Fahrweise für eine nachfolgende Berechnung ist.

18. Vorrichtung nach Anspruch 17, **dadurch gekennzeichnet, dass** die resultierende optimale Fahrweise die resultierende Fahrweise aus der Berechnung ist, die der Berechnung mit der ersten resultierenden Fahrweise vorangegangen ist, welche eine negative Verweilzeit umfasst.

19. Vorrichtung nach Anspruch 17, **dadurch gekennzeichnet, dass** die resultierende optimale Fahrweise die resultierende Fahrweise ist, bei der das Doppelte der Verweilzeit bei dieser Fahrweise minus die Verweilzeit bei der resultierenden Fahrweise aus der vorangegangenen Berechnung negativ ist.

20. Vorrichtung nach Anspruch 17, 18 oder 19, **dadurch gekennzeichnet, dass** ein Speichermittel (3) alle resultierenden Fahrweisen speichert und das Berechnungsmittel die Reihenfolge der aufeinanderfolgenden resultierenden Fahrweisen umkehrt, wobei die umgekehrte Reihenfolge bei abnehmender Anwendungspriorität von hinten bei der resultierenden optimalen Fahrweise beginnt.

21. Vorrichtung nach Anspruch 20, **dadurch gekennzeichnet, dass** es sich bei einer angewandten resultierenden Fahrweise um eine resultierende Fahrweise von geringerer Priorität statt einer zuvor angewandten resultierenden Fahrweise von höherer Priorität handelt, wodurch eine zeitliche Verzögerung des Fahrzeugs zwischen zwei Haltestellen in Bezug auf einen vorgegebenen Fahrplan kompensiert wird.

22. Vorrichtung nach einem der vorhergehenden Ansprüche 16 bis 21, **dadurch gekennzeichnet, dass** das Fahrzeug während des Betriebs gemäß einer angewandten resultierenden Fahrweise von einem Steuermittel (5) gesteuert wird.

23. Vorrichtung nach einem der vorhergehenden Ansprüche 16 bis 22, **dadurch gekennzeichnet, dass** sich die lokalen Aktionspunkte (A, B, C) bei einer Fahrweise an Stellen befinden, an denen es zu Reduzierungen einer Antriebskraft des Fahrzeugs kommt.

24. Vorrichtung nach einem der vorhergehenden Ansprüche 16 bis 23, **dadurch gekennzeichnet, dass** durch eine Energiesparmaßnahme ein Abschnitt von konstanter Geschwindigkeit eingeleitet wird, die geringer ist als die Maximalgeschwindigkeit bei der ursprünglichen Fahrweise in diesem Abschnitt.

25. Vorrichtung nach Anspruch 24, **dadurch gekennzeichnet, dass** das Einleiten durch Verlängern eines bestehenden Abschnitts von konstanter Geschwindigkeit auf einen größeren Abschnitt mit reduzierter konstanter Geschwindigkeit erfolgt.

26. Vorrichtung nach Anspruch 24, **dadurch gekennzeichnet, dass** das Einleiten durch Einleiten eines Abschnitts von konstanter Geschwindigkeit umgesetzt wird, wo zuvor auf eine Beschleunigung eine Abbremsung erfolgte.

27. Vorrichtung nach einem der vorhergehenden Ansprüche 16 bis 26, **dadurch gekennzeichnet, dass** durch eine Energiesparmaßnahme ein Ausrollen eingeleitet wird.

28. Vorrichtung nach Anspruch 27, **dadurch gekennzeichnet, dass** Ausrollen an Aktionspunkten angewandt wird, wo eine Antriebskraft des Fahrzeugs von einem positiven Wert auf einen negativen Wert oder null wechselt.

29. Vorrichtung nach einem der vorhergehenden Ansprüche 16 bis 28, **dadurch gekennzeichnet, dass** alle Fahrweisen entweder durch Vektoren für Geschwindigkeit und Zeit oder für Geschwindigkeit und Entfernung repräsentiert werden.

30. Vorrichtung nach einem der vorhergehenden Ansprüche 16 bis 29, **dadurch gekennzeichnet, dass** es sich bei der ursprünglichen Fahrweise aus einer ersten Berechnung um eine Fahrweise mit minimaler Fahrzeit und maximalem Energieverbrauch handelt.

## Revendications

1. Procédé destiné à minimiser la consommation d'énergie d'un véhicule appliquant des modèles de conduite résultants, moyennant quoi un moyen de calcul lors d'un calcul
- commence à partir d'un modèle de conduite initial comprenant au moins un point d'action local (A ; B ; C) ;
- fait varier progressivement une durée et/ou une quantité de changement d'une mesure d'économie d'énergie appliquée à un point d'action local (A ; B ; C) et crée des modèles de conduite consécutifs ;
- identifie une étape de variation avec un ratio maximal de réduction d'énergie et d'extension de temps de trajet par rapport au modèle de conduite initial ;
- exécute la variation et l'identification pour chaque point d'action local (A, B, C) ;
- fournit un modèle de conduite résultant de l'étape de variation avec une valeur maximale globale du ratio maximal de réduction d'énergie et d'extension de temps de trajet.

2. Procédé selon la revendication 1, **caractérisé en ce que** le moyen de calcul répète le calcul et génère une séquence de modèles de conduite résultants consécutifs jusqu'à ce qu'il fournisse un modèle de conduite résultant optimal, moyennant quoi un modèle de conduite résultant d'un précédent calcul est le modèle de conduite initial pour un calcul ultérieur.

3. Procédé selon la revendication 2, **caractérisé en ce que** le modèle de conduite résultant optimal est le modèle de conduite résultant du calcul précédant le calcul avec le premier modèle de conduite résultant comprenant un temps de rétention négatif.

4. Procédé selon la revendication 2, **caractérisé en ce que** le modèle de conduite résultant optimal est le modèle de conduite résultant où le double du temps de rétention de ce modèle de conduite moins le temps de rétention du modèle de conduite résultant du précédent calcul est négatif.

5. Procédé selon la revendication 2, 3 ou 4, **caractérisé en ce qu'**un moyen de stockage stocke tous les modèles de conduite résultants et le moyen de calcul inverse la séquence des modèles de conduite résultants consécutifs, la séquence inversée commençant à l'envers par rapport au modèle de conduite résultant optimal avec une priorité d'application décroissante.

6. Procédé selon la revendication 5, **caractérisé en ce qu'**un modèle de conduite résultant appliqué est un modèle de conduite résultant ayant une priorité plus faible à la place d'un modèle de conduite résultant ayant une priorité plus élevée appliqué auparavant pour compenser un retard du véhicule entre deux arrêts par rapport à un planning prescrit.

7. Procédé selon l'une des revendications précédentes, **caractérisé en ce que** le véhicule est commandé par un moyen de commande tout en fonctionnant selon un modèle de conduite résultant appliqué.

8. Procédé selon l'une des revendications précédentes, **caractérisé en ce que** les points d'action locaux (A, B, C) sont localisés au niveau de sites d'un modèle de conduite où des réductions d'une force d'entraînement du véhicule se produisent.

9. Procédé selon l'une quelconque des revendications précédentes, **caractérisé en ce qu'**une mesure d'économie d'énergie introduit une section de vitesse constante qui est inférieure à la vitesse maximale dans cette section du modèle de conduite initial.

10. Procédé selon la revendication 9, **caractérisé en ce que** l'introduction est mise en oeuvre en étendant une section existante de vitesse constante à une section plus grande avec une vitesse constante réduite.

11. Procédé selon la revendication 9, **caractérisé en ce que** l'introduction est mise en oeuvre en introduisant une section de vitesse constante où au préalable une accélération a été suivie par une décélération.

12. Procédé selon l'une des revendications précédentes, **caractérisé en ce qu'**une mesure d'économie d'énergie introduit une marche par inertie.

13. Procédé selon la revendication 12, **caractérisée en ce que** la marche par inertie est appliquée au niveau de point d'action où une force d'entraînement d'un véhicule passe d'une valeur positive à une valeur négative ou à zéro.

14. Procédé selon l'une des revendications précédentes, **caractérisé en ce que** tous les modèles de conduite sont représentés par des vecteurs pour soit la vélocité et le temps soit la vélocité et la distance.

15. Procédé selon l'une des revendications précédentes, **caractérisé en ce que** le modèle de conduite initial d'un premier calcul est un modèle de conduite avec un temps de trajet minimal et une consommation d'énergie maximale.

16. Dispositif (D) destiné à minimiser la consommation d'énergie d'un véhicule (R) appliquant des modèles de conduite résultants, moyennant quoi un moyen de calcul (1) lors d'un calcul
- commence à partir d'un modèle de conduite initial comprenant au moins un point d'action local (A ; B ; C) ;
- fait varier progressivement une durée et/ou une quantité de changement d'une mesure d'économie d'énergie appliquée à un point d'action local (A ; B ; C) et crée des modèles de conduite consécutifs ;
- identifie une étape de variation avec un ratio maximal de réduction d'énergie et d'extension de temps de trajet par rapport au modèle de conduite initial ;
- exécute la variation et l'identification pour chaque point d'action local (A, B, C) ;
- fournit un modèle de conduite résultant de l'étape de variation avec une valeur maximale globale du ratio maximal de réduction d'énergie et d'extension de temps de trajet.

17. Dispositif selon la revendication 16, **caractérisé en ce que** le moyen de calcul répète le calcul et génère une séquence de modèle de conduite résultants consécutifs jusqu'à ce qu'il fournisse un modèle de conduite résultant optimal, moyennant quoi un modèle de conduite résultant d'un précédent calcul est le modèle de conduite initial pour un calcul ultérieur.

18. Dispositif selon la revendication 17, **caractérisé en ce que** le modèle de conduite résultant optimal est le modèle de conduite résultant du calcul précédant le calcul avec le premier modèle de conduite résultant comprenant un temps de rétention négatif.

19. Dispositif selon la revendication 17, **caractérisé en ce que** le modèle de conduite résultant optimal est le modèle de conduite résultant où le double du temps de rétention de ce modèle de conduite moins le temps de rétention du modèle de conduite résultant du précédent calcul est négatif.

20. Dispositif selon la revendication 17, 18 ou 19, **caractérisé en ce qu'**un moyen de stockage (3) stocke tous les modèles de conduite résultant et le moyen de calcul inverse la séquence des modèles de conduite résultants consécutifs, la séquence inversée commençant à l'envers par rapport au modèle de conduite résultant optimal avec une priorité d'application décroissante.

21. Dispositif selon la revendication 20, **caractérisé en ce qu'**un modèle de conduite résultant appliqué est un modèle de conduite ayant une priorité plus faible à la place d'un modèle de conduite résultant ayant une priorité plus élevée appliqué auparavant pour compenser un retard du véhicule entre deux arrêts par rapport à un planning prescrit.

22. Dispositif selon l'une des revendications précédentes 16 à 21, **caractérisé en ce que** le véhicule est commandé par un moyen de commande (5) tout en fonctionnant selon un modèle de conduite résultant appliqué.

23. Dispositif selon l'une des revendications précédentes 16 à 22, **caractérisé en ce que** les points d'action locaux (A, B, C) sont localisés au niveau de sites d'un modèle de conduite où des réductions d'une force d'entraînement du véhicule se produisent.

24. Dispositif selon l'une des revendications précédentes 16 à 23, **caractérisé en ce qu'**une mesure d'économie d'énergie introduit une section de vitesse constante qui est inférieure à la vitesse maximale dans cette section du modèle de conduite initial.

25. Dispositif selon la revendication 24, **caractérisé en ce que** l'introduction est mise en oeuvre en étendant une section existante de vitesse constante à une section plus grande avec une vitesse constante réduite.

26. Dispositif selon la revendication 24, **caractérisé en ce que** l'introduction est mise en oeuvre en introduisant une section de vitesse constante où au préalable une accélération a été suivie par une décélération.

27. Dispositif selon l'une des revendications précédentes 16 à 26, **caractérisé en ce qu'**une mesure d'économie d'énergie introduit une marche par inertie.

28. Dispositif selon la revendication 27, **caractérisé en ce que** la marche par inertie est appliquée au niveau de point d'action où une force d'entraînement d'un véhicule passe d'une valeur positive à une valeur négative ou à zéro.

29. Dispositif selon l'une des revendications précédentes 16 à 28, **caractérisé en ce que** tous les modèles de conduite sont représentés par des vecteurs pour soit la vélocité et le temps soit la vélocité et la distance.

30. Dispositif selon l'une des revendications précédentes 16 à 29, **caractérisé en ce que** le modèle de conduite initial d'un premier calcul est un modèle de conduite avec un temps de trajet minimal et une consommation d'énergie maximale.
